# EUROPÄISCHE PATENTSCHRIFT

(11) **EP 1 778 437 B1**
(45) Veröffentlichungstag und Bekanntmachung des Hinweises auf die Patenterteilung: **11.03.2009**
(21) Anmeldenummer: 05766814.7
(22) Anmeldetag: 22.06.2005
(51) Int. Cl.: B24B 23/02, B24B 23/04, B24B 55/10, B24D 9/00, B23Q 11/00

(54) **HANDWERKZEUGMASCHINE, INSBESONDERE SCHLEIFMASCHINE**
HAND MACHINE TOOL, PARTICULARLY A SANDING MACHINE
MACHINE-OUTIL MANUELLE, NOTAMMENT PONCEUSE

(30) Priorität: 13.08.2004 DE 102004039293
(43) Veröffentlichungstag der Anmeldung: 02.05.2007
(73) Patentinhaber: ROBERT BOSCH GMBH, 70442 Stuttgart (DE)
(72) Erfinder: BOHNE, Ulrich, 72664 Kohlberg (DE); HILD, Eugen, 72631 Aichtal (DE); ROEHM, Heiko, 70176 Stuttgart (DE)
(86) Internationale Anmeldenummer: PCT/EP2005/052905
(87) Internationale Veröffentlichungsnummer: WO 2006/018343

(56) Entgegenhaltungen:
- WO-A-01/15857
- DE-U1- 9 002 801
- GB-A- 2 321 207

## Beschreibung

### Stand der Technik

Die Erfindung geht insbesondere aus von einer Handwerkzeugmaschine nach dem Oberbegriff des Anspruchs 1.

Es ist bereits eine von einem so genannten Deltaschleifer gebildete Handwerkzeugmaschine mit einem Gehäuse und einem im Gehäuse angeordneten Motor bekannt, über den eine sich aus einer Stirnseite des Gehäuses erstreckende Abtriebswelle antreibbar ist. Die Handwerkzeugmaschine weist einen durch das Gehäuse verlaufenden Absaugkanal auf, der auf einer Unterseite des Gehäuses in Richtung der Abtriebswelle beabstandet vor der Stirnseite des Gehäuses mündet. Der im Gehäuse verlaufende Absaugkanal ist über einen elastischen Adapter nach außen abgedichtet mit einem Absaugkanal einer mit der Abtriebswelle gekoppelten, dreieckigen Werkzeugaufnahme verbunden, die über die Abtriebswelle antreibbar ist. Der Absaugkanal der Werkzeugaufnahme ist wiederum nach außen abgedichtet mit einem Absaugkanal einer dreieckigen Schleifplatte gekoppelt, die an der Werkzeugaufnahme lösbar befestigt ist und an der ein Schleifpapier befestigbar ist.

Dokument WO 01-15857 zeigt eine Handwerkzeugmaschine nach dem Oberbegriff des Anspruchs 1.

### Vorteile der Erfindung

Die Erfindung geht aus von einer Handwerkzeugmaschine, insbesondere einer Schleifmaschine, mit einem Gehäuse und einem im Gehäuse angeordneten Motor, über den eine sich aus einer Stirnseite des Gehäuses erstreckende Abtriebswelle antreibbar ist, und mit einem zumindest teilweise durch das Gehäuse verlaufenden Absaugkanal.

Es wird vorgeschlagen, dass der Absaugkanal an der Stirnseite mündet, wodurch eine besonders vorteilhafte Absaugung mit wenigen oder sogar ohne zusätzliche Bauteile erreicht werden kann.

Der Absaugkanal erstreckt sich in zumindest einem Bereich um mindestens 180° um die Abtriebswelle und besonders vorteilhaft um 360°, kann eine vorteilhafte, über eine Schleiffläche gleichmäßige Absaugung erreicht und eine Überdeckung des Absaugkanals mit korrespondierenden Absaugkanälen kann einfach gewährleistet werden. Der Absaugkanal kann im Bereich der Abtriebswelle in dessen Umfangsrichtung ungeteilt oder auch in einzelne Segmente unterteilt sein.

In einer Ausgestaltung der Erfindung wird vorgeschlagen, dass der Absaugkanal zur Abtriebswelle in zumindest einem Bereich einen kleineren Abstand als 1 cm aufweist und besonders vorzugsweise in zumindest einem Bereich unmittelbar an die Abtriebswelle anschließt. Hierdurch kann trotz des Absaugkanals eine vorteilhaft kleine Stirnseite erreicht werden, mittels der ein handliches Arbeiten mit der Handwerkzeugmaschine auch in Eckbereichen gewährleistet ist, und zudem kann eine vorteilhafte große Lagerfläche an der Abtriebswelle zur Ankopplung einer Werkzeugaufnahme erreicht werden, um möglichst kleine Flächenpressungswerte zu erzielen.

Eine Werkzeugaufnahme mit wenigstens einem Absaugkanal, ist zur Montage an einer gattungsgemäßen Handwerkzeugmaschine vorgesehen. Unter "vorgesehen" soll in diesem Zusammenhang insbesondere "speziell ausgestattet" und/oder "ausgelegt" verstanden werden. Zudem soll unter einer "Werkzeugaufnahme" insbesondere ein Mittel zur Kopplung mit der Abtriebswelle verstanden werden, wie insbesondere eine Werkzeugaufnahme, an der beispielsweise eine Schleifplatte befestigt werden kann, wie dies bei einem Deltaschleifer häufig der Fall ist, oder auch eine Schleifplatte selbst, die direkt an der Abtriebswelle befestigt werden kann, wie dies häufig bei Handwerkzeugmaschinen mit einem oszillierenden Antrieb der Fall ist, und an der ein Schleifpapier befestigt werden kann.

Weist der Absaugkanal in der Werkzeugaufnahme zumindest ein Querkanalstück auf, das sich zumindest im Wesentlichen parallel zu einer Schleifebene erstreckt, kann eine Absaugung flexibel aus verschiedenen Bereichen der Schleifebene erreicht werden, insbesondere aus einem radial äußeren Bereich zur Stirnseite der Handwerkzeugmaschine. Ferner können konventionelle Schleifblätter verwendet werden, die radial außerhalb der Stirnseite der Handwerkzeugmaschine Ausnehmungen zur Staubabsaugung aufweisen.

In einer weiteren Ausgestaltung der Erfindung wird vorgeschlagen, dass das Querkanalstück in Richtung zur Schleifebene offen ausgebildet ist, wodurch eine besonders einfache Herstellung, insbesondere ohne aufwendige Klebevorgänge oder Kerne in einem Gießverfahren, erreicht werden kann. Ferner kann die Werkzeugaufnahme insbesondere einteilig ausgeführt werden.

Ferner wird ein System mit einer gattungsgemäßen Handwerkzeugmaschine und einer Werkzeugaufnahme mit einem Absaugkanal im Gehäuse der Handwerkzeugmaschine und der Absaugkanal in der Werkzeugaufnahme zur direkten Kopplung vorgesehen. Unter einer "direkten Kopplung" soll insbesondere eine Kopplung ohne dazwischengeschaltete, zusätzliche Bauteile verstanden werden. Durch die erfindungsgemäße Lösung können insbesondere zusätzliche Adapter, Bauraum, Gewicht, Montageaufwand und Kosten eingespart werden.

In einer weiteren Ausgestaltung der Erfindung wird vorgeschlagen, dass der Absaugkanal im Gehäuse der Handwerkzeugmaschine und der Absaugkanal in der Werkzeugaufnahme im montierten Zustand der Werkzeugaufnahme über einen nach außen offenen Bereich gekoppelt sind, wodurch eine einfache Ankopplung ohne zusätzliche Bauteile erreicht und insbesondere eine vorteilhafte Staubabsaugung über den offenen Bereich aus einem Außenbereich des Absaugkanals erzielt werden kann.

Die erfindungsgemäße Lösung ist bei sämtlichen, dem Fachmann als hierfür geeignet erscheinenden Handwerkzeugmaschinen anwendbar, beispielsweise bei Bohrmaschinen, vorzugsweise bei Schleifmaschinen, wie bei Deltaschleifmaschinen, Exzenterschleifmaschinen, Winkelschleifmaschinen, und besonders bevorzugt bei Handwerkzeugmaschinen mit einem oszillierenden Antrieb, bei denen eine vorteilhafte Überdeckung zwischen dem Absaugkanal im Gehäuse der Handwerkzeugmaschine und dem Absaugkanal in der Werkzeugaufnahme besonders einfach erreichbar ist.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination.

Es zeigen:
- Fig. 1: eine Handwerkzeugmaschine in einer Seitenansicht mit einer abgenommenen Gehäusehälfte,
- Fig. 2: einen vergrößerten Ausschnitt der Handwerkzeugmaschine im Bereich einer Abtriebswelle mit einer Schleifplatte und einem Schleifpapier in einer ersten Ansicht,
- Fig. 3: den Ausschnitt gemäß Fig. 2 in einer zweiten Ansicht ohne Schleifpapier,
- Fig. 4: die Schleifplatte aus Fig. 2 von oben,
- Fig. 5: die Schleifplatte aus Fig. 2 von unten und
- Fig. 6: einen vergrößerten Ausschnitt der Handwerkzeugmaschine gemäß Fig. 2 mit einem Sägeblatt.

### Beschreibung des Ausführungsbeispiels

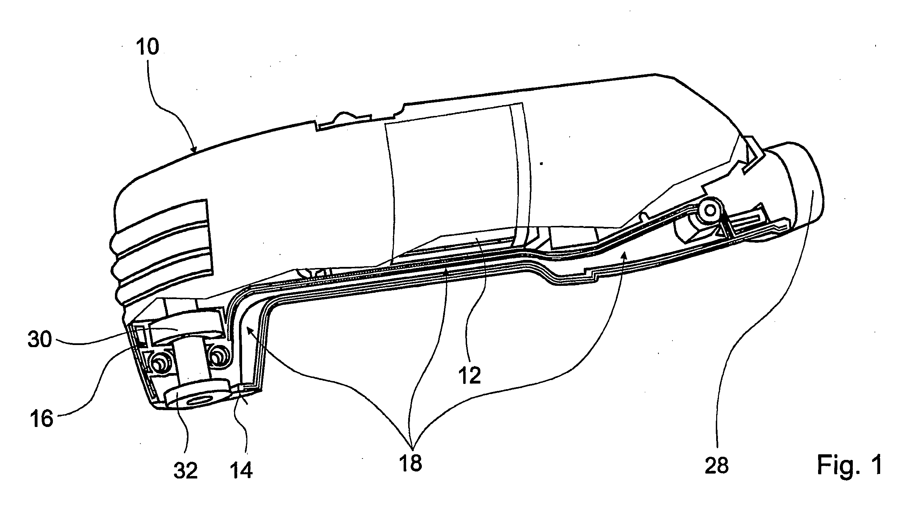

Figur 1 zeigt eine von einer handgeführten Schleifmaschine gebildete Handwerkzeugmaschine mit einem im Wesentlichen L-förmigen, längsgeteilten Gehäuse 10 und einem im Gehäuse 10 angeordneten Elektromotor 12, über den eine sich aus einer vorderen Stirnseite 14 des Gehäuses 10 erstreckende Abtriebswelle 16 oszillierend antreibbar ist. Auf einer Unterseite des Gehäuses 10 ist ein Absaugkanal 18 in das Gehäuse 10 integriert, der sich von einem der Abtriebswelle 16 abgewandten Ende der Handwerkzeugmaschine, ausgehend von einem Austrittsstutzen 28, in Längsrichtung des Gehäuses 10 bis zur Stirnseite 14 erstreckt und erfindungsgemäß an bzw. in dieser mündet. Das Gehäuse 10 weist im vorderen um ca. 90° abgewinkelten Bereich einen kleineren Durchmesser auf als im Bereich des Elektromotors 12. Um dies strömungstechnisch auszugleichen, weist der Absaugkanal 18 im vorderen abgewinkelten Bereich der Handwerkzeugmaschine in radialer Richtung zur Abtriebswelle 16 eine größere Erstreckung auf als im Bereich des Elektromotors 12 in radialer Richtung zum Elektromotor 12. Zusätzlich oder alternativ zu einer Längsteilung kann das Gehäuse 10 auch quergeteilt ausgeführt sein, beispielsweise kann das Gehäuse 10 mit einem vorderen Getriebegehäuseteil ausgeführt sein.

In Richtung zum freien Ende der Abtriebswelle 16 schließt der Absaugkanal 18 in einem Bereich nach einem Lager 30 unmittelbar an die Abtriebswelle 16 an, erstreckt sich um 360° um die Abtriebswelle 16 und ist ringkanalförmig an einem Anlageflansch 32 der Abtriebswelle 16 vorbei nach außen aus dem Gehäuse 10 geführt. Der Absaugkanal 18 bildet an der Stirnseite 14 einen Ringspalt.

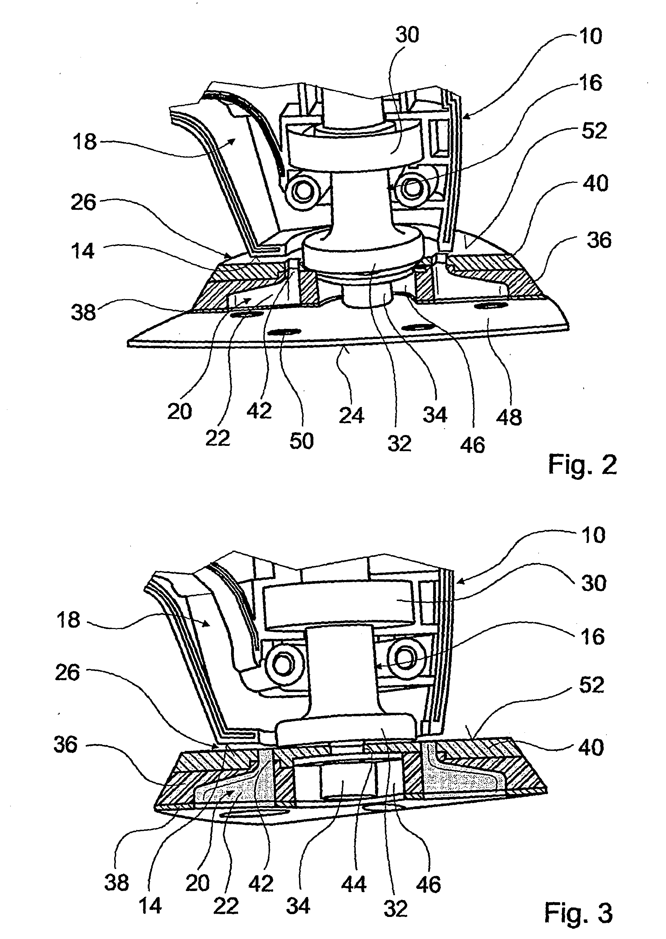

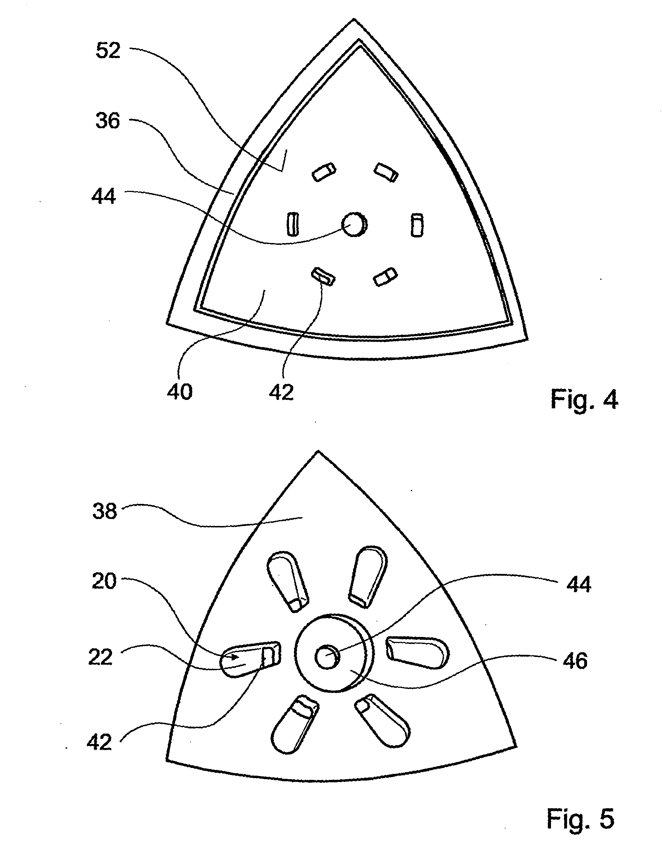

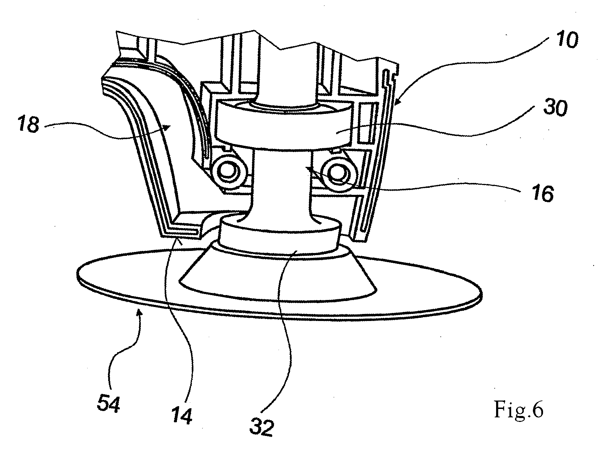

In den Figuren 2 und 3 ist an der Abtriebswelle 16 eine von einer Schleifplatte gebildete Werkzeugaufnahme befestigt, die eine dreieckige Grundfläche mit konvex gebogenen Seitenkanten aufweist (Figuren 4 und 5). Die Werkzeugaufnahme weist eine Trägerplatte 40 auf. Die Trägerplatte 40 weist in ihrem Zentrum eine Ausnehmung 44 auf, mit der dieselbe auf die Abtriebswelle 16 aufgesteckt und mit einer auf die Abtriebswelle 16 aufgeschraubten Befestigungsschraube 34 in axialer Richtung an eine Anlagefläche des Anlageflansches 32 der Abtriebswelle 16 gepresst ist.

Zudem weist die Werkzeugaufnahme einen gummielastisch geschäumten Plattenteil 36 auf, der auf einer der Handwerkzeugmaschine abgewandten Seite an der Trägerplatte 40 befestigt ist bzw. angeschäumt ist, und an dessen auf seiner der Handwerkzeugmaschine abgewandten Seite eine Klettverschlusslage 38 befestigt ist.

Die Werkzeugaufnahme weist sechs gleichmäßig über den Umfang verteile, im Wesentlichen L-förmige, sich entsprechende Absaugkanäle 20 auf. Die Absaugkanäle 20 weisen jeweils ein sich von einem radial äußeren Bereich der Werkzeugaufnahme radial nach innen, im Wesentlichen parallel zu einer Schleifebene 24 erstreckendes, verjüngendes Querkanalstück 22 auf, an das sich im radial inneren Bereich ein durch einen restlichen Teil des geschäumten Plattenteils 36 und durch die Trägerplatte 40 erstreckendes Axialkanalstück 42 anschließt. Das Axialkanalstück 42 ist in radialer Richtung nach innen beabstandet vor einer zentrischen Ausnehmung 46 der Klettverschlusslage 38 und des geschäumten Plattenteils 36 angeordnet, so dass radial innerhalb der Absaugkanäle 20 jeweils ein Ringstegsegment entsteht, das vorteilhaft zur Auflage eines Schleifpapiers 48 genutzt werden kann.

Die Querkanalstücke 22 der Absaugkanäle 20 sind in Richtung zur Schleifebene 24 offen ausgebildet und werden erst mit der Montage des Schleifpapiers 48 bis auf Absaugöffnungen 50 in demselben in Richtung Schleifebene 24 verschlossen. Die Absaugöffnungen 50 im Schleifpapier 48 kommen bei der Montage desselben jeweils im radial äußeren Bereich der Absaugkanäle 20 mit diesen in Überdeckung. Grundsätzlich wäre auch denkbar, dass die Werkzeugaufnahme wenigstens ein bereits zumindest teilweise verschlossenes Querkanalstück aufweist, beispielsweise könnte ein in die Trägerplatte 40 eingebrachtes Querkanalstück von dem geschäumten Plattenteil 36 in axialer Richtung verschlossen sein, und/oder es könnte ein in das geschäumte Plattenteil 36 eingebrachtes Querkanalstück mit einem Kern bereits zumindest teilweise in axialer Richtung verschlossen hergestellt und/oder durch die Klettverschlusslage 38 zumindest teilweise in axialer Richtung verschlossen ausgeführt sein.

Der Absaugkanal 18 im Gehäuse 10 der Handwerkzeugmaschine und der Absaugkanal 20 in der Werkzeugaufnahme sind direkt, d.h. ohne zwischengeschaltetes Bauteil, über einen nach außen offenen Bereich 26 gekoppelt. Der offene Bereich 26 wird von einem Ringspalt zwischen der Stirnseite 14 des Gehäuses 10 und einer Deckseite 52 der Werkzeugaufnahme gebildet. Der Abstand zwischen der Stirnseite 14 des Gehäuses 10 und der Deckseite 52 der Werkzeugaufnahme in axialer Richtung der Abtriebswelle 16 ist vorzugsweise kleiner als 15 mm, besonders bevorzugt kleiner als 5 mm, und ist im vorliegenden Ausführungsbeispiel 1 mm. Die Axialkanalstücke 42 der Absaugkanäle 20 der Werkzeugaufnahme kommen bei der Montage der Werkzeugaufnahme direkt über dem von dem Absaugkanal 18 gebildeten Ringspalt in der Stirnseite 14 zum Liegen.

In Figur 6 ist die Handwerkzeugmaschine mit einem von einem Sägeblatt gebildeten Werkzeug 54 dargestellt. Bei einer entsprechenden Anwendung der Handwerkzeugmaschine können ebenfalls anfallende Sägespäne über den Absaugkanal 18 vorteilhaft abgesaugt werden.

### Bezugszeichen

- 10: Gehäuse
- 12: Motor
- 14: Stirnseite
- 16: Abtriebswelle
- 18: Absaugkanal
- 20: Absaugkanal
- 22: Querkanalstück
- 24: Schleifebene
- 26: Bereich
- 28: Austrittsstutzen
- 30: Lager
- 32: Anlageflansch
- 34: Befestigungsschraube
- 36: Plattenteil
- 38: Klettverschlusslage
- 40: Trägerplatte
- 42: Axialkanalstück
- 44: Ausnehmung
- 46: Ausnehmung
- 48: Schleifpapier
- 50: Absaugöffnung
- 52: Deckseite
- 54: Werkzeug

## Patentansprüche

1. Handwerkzeugmaschine, insbesondere Schleifmaschine, mit einem Gehäuse (10) und einem im Gehäuse (10) angeordneten Motor (12), über den eine sich aus einer Stirnseite (14) des Gehäuses (10) erstreckende Abtriebswelle (16) in angetriebener Verbindung steht, und mit einem zumindest teilweise durch das Gehäuse (10) verlaufenden Absaugkanal (18), wobei der Absaugkanal (18) an der Stirnseite (14) mündet und sich der Absaugkanal (18) in zumindest einem Bereich um mindestens 180° um die Abtriebswelle (16) erstreckt, **dadurch gekennzeichnet, dass** der Absaugkanal (18) ringkanalförming an einem Anlageflansch (32) der Abtriebswelle (16) vorbei nach außen aus dem Gehäuse (10) geführt ist und der Absaugkanal (18) an der Stirnseite (14) des Gehäuses (10) einen Ringspalt bildet.

2. Handwerkzeugmaschine nach Anspruch 1, **dadurch gekennzeichnet, dass** sich der Absaugkanal (18) in zumindest einem Bereich um 360° um die Abtriebswelle (16) erstreckt.

3. Handwerkzeugmaschine nach einem der vorhergehenden Ansprüche, **dadurch gekennzeichnet, dass** der Absaugkanal (18) zur Abtriebswelle (16) in zumindest einem Bereich einen kleineren Abstand als 1 cm aufweist.

## Claims

1. Portable power tool, particularly a sander, having a housing (10) and a motor (12) which is arranged in the housing (10) and via which an output shaft (16) extending from an end face (14) of the housing (10) is in driven connection, and having a suction passage (18) running at least partly through the housing (10), wherein the suction passage (18) opens out at the end face (14), and the suction passage (18) extends, in at least one region, by at least 180° around the output shaft (16), **characterized in that** the suction passage (18) is directed outwards from the housing (10) in the shape of an annular passage past a bearing flange (32) of the output shaft (16), and the suction passage (18) forms an annular gap at the end face (14) of the housing (10).

2. Portable power tool according to Claim 1, **characterized in that** the suction passage (18) extends, in at least one region, by 360° around the output shaft (16).

3. Portable power tool according to either of the preceding claims, **characterized in that** the suction passage (18), in at least one region, is at a distance of less than 1 cm from the output shaft (16).

## Revendications

1. Machine-outil manuelle, notamment ponceuse, comprenant un boîtier (10) et un moteur (12) disposé dans le boîtier (10), par le biais duquel un arbre de sortie (16) s'étendant depuis un côté frontal (14) du boîtier (10) est en liaison entraînée, et comprenant également un canal d'aspiration (18) s'étendant au moins en partie à travers le boîtier (10), le canal d'aspiration (18) débouchant au niveau du côté frontal (14) et le canal d'aspiration (18) s'étendant dans au moins une région sur au moins 180° autour de l'arbre de sortie (16), **caractérisée en ce que** le canal d'aspiration (18) est guidé sous forme de canal annulaire devant une bride d'appui (32) de l'arbre de sortie (16) vers l'extérieur hors du boîtier (10) et le canal d'aspiration (18) forme au niveau du côté frontal (14) du boîtier (10) une fente annulaire.

2. Machine-outil manuelle selon la revendication 1, **caractérisée en ce que** le canal d'aspiration (18) s'étend dans au moins une région sur 360° autour de l'arbre de sortie (16).

3. Machine-outil manuelle selon l'une quelconque des revendications précédentes, **caractérisée en ce que** le canal d'aspiration (18) présente par rapport à l'arbre de sortie (16), dans au moins une région, une distance inférieure à 1 cm.
